# EUROPÄISCHE PATENTSCHRIFT

(11) **EP 3 814 073 B1**
(45) Veröffentlichungstag und Bekanntmachung des Hinweises auf die Patenterteilung: **02.11.2022**
(21) Anmeldenummer: 19758599.5
(22) Anmeldetag: 24.06.2019
(51) Int. Cl.: B25J 9/16

(54) **VERFAHREN UND SYSTEM ZUR LAUFENDEN SPEICHERUNG UND SPÄTEREN VISUALISIERUNGDARSTELLUNG VON INTERNEN BETRIEBSZUSTÄNDEN EINES ROBOTERS UND EINER SPRITZGIESSMASCHINE**
METHOD AND SYSTEM FOR CONTINUOUSLY STORING AND FOR LATER VISUALLY REPRESENTING INTERNAL OPERATING STATES OF A ROBOT AND AN INJECTION MOLDING MACHINE
PROCÉDÉ ET SYSTÈME DE MÉMORISATION CONTINUE ET DE REPRÉSENTATION DE VISUALISATION ULTÉRIEURE D'ÉTATS DE FONCTIONNEMENT INTERNES D'UN ROBOT ET D'UNE MACHINE DE MOULAGE PAR INJECTION

(30) Priorität: 29.06.2018 AT 505372018
(43) Veröffentlichungstag der Anmeldung: 05.05.2021
(73) Patentinhaber: Wittmann Kunststoffgeräte GmbH, 1220 Wien (AT)
(72) Erfinder: RELLA, Johann, 2671 Payerbach (AT); WITTMANN, Peter Michael, 2100 Leobendorf (AT)
(74) Vertreter: Felfernig, Oliver
(86) Internationale Anmeldenummer: PCT/AT2019/060208
(87) Internationale Veröffentlichungsnummer: WO 2020/000007

(56) Entgegenhaltungen:
- EP-A2- 1 304 194
- EP-A2- 1 518 648
- DE-A1-102009 023 648
- DE-A1-102016 000 105
- Osrf: "Gazebo : Tutorial : Visualization and logging", Gazebo, 1. Januar 2014 (2014-01-01), Seiten 1-7, XP055642231, Gefunden im Internet: URL:http://gazebosim.org/tutorials?tut=drc sim_visualization&cat=drcsim [gefunden am 2019-11-13]
- RISTER B D ET AL: "Integrated Debugging of Large Modular Robot Ensembles", 2007 IEEE INTERNATIONAL CONFERENCE ON ROBOTICS AND AUTOMATION - 10-14 APRIL 2007 - ROMA, ITALY, IEEE, PISCATAWAY, NJ, USA, 10. April 2007 (2007-04-10), Seiten 2227-2234, XP031389122, ISBN: 978-1-4244-0601-2
- KAI LIANG ET AL: "Fault localization in embedded control system software", SOFTWARE ENGINEERING FOR SMART CYBER-PHYSICAL SYSTEMS, IEEE PRESS, 445 HOES LANE, PO BOX 1331, PISCATAWAY, NJ 08855-1331 USA, 16. Mai 2015 (2015-05-16), Seiten 8-14, XP058072686, DOI: 10.1109/SESCPS.2015.10

## Beschreibung

Die Erfindung betrifft ein Verfahren zur laufenden Speicherung von internen Betriebszuständen und zur Visualisierung von zeitlich zurückliegenden Ablaufsequenzen eines Roboters und/oder einer Robotsteuerung sowie einen Roboter umfassend eine Robotsteuerung hierfür, wie es in den Oberbegriffen der Ansprüche 1 und 6 beschrieben ist.

Es sind bereits Systeme bekannt, bei denen alle Daten über den gesamten Zeitraum in einer Arbeitsanlage durch entsprechende Aktivierung aufgezeichnet werden. Anschließend werden die Daten durch Verbinden der Arbeitsanlage mit einem Laptop oder Computer auf diesen übertragen und gespeichert, worauf am Laptop oder Computer extern die Daten analysiert werden können.

Nachteilig ist hierbei, dass bei einem derartigen Vorgehen eine Fehleranalyse nicht sofort vorgenommen werden kann und somit die Anlage über einen längeren Zeitraum außer Betrieb gesetzt bleibt, bis die Ursache des Fehlers gefunden und behoben werden konnte. Auch ist bei einem längeren Arbeitszyklus eine große Datenmenge gespeichert, was einen erheblichen Analyseaufwand verursacht.

Aus der EP 1 518 648 A ist ein Robotersystem bekannt, bei dem eines von mehreren Werkstücken, die in einem korbartigen Behälter angeordnet sind, mit einer am vorderen Ende eines Roboterarms montierten Hand erfasst und herausgenommen wird. Das Werkstück wird von einem visuellen Sensor erkannt und der Roboter wird abhängig von einer Position und einer Ausrichtung des Werkstücks gesteuert. Wenn ein Problem wie eine Störung oder dergleichen auftritt, werden Informationen, die sich auf das Problem beziehen, in einer Robotersteuereinheit oder einer visuellen Sensorsteuereinheit gespeichert. Wenn das Problem reproduziert wird, werden diese Daten verwendet, um die Situation zum Zeitpunkt des Auftretens des Problems mithilfe einer Simulationseinheit zu simulieren.

Nachteilig ist hierbei, dass die Simulation eines Fehlerfalles in einer separaten Simulationseinheit "Simulation Unit" vorgenommen wird. Darüber hinaus werden nur Daten vom Roboter, die sich mit dem Problem beziehen, gespeichert und keine weiteren Daten, die für eine umfassende Fehleranalyse notwendig wären.

Die EP 1 304 194 A2 beschreibt ein System bei dem ein Computer mit einem Roboter und einer Schweißvorrichtung verbunden ist, wobei der Computer die Positionsinformationen vom Roboter empfängt. Dabei werden am Computer die Befehlsinformationen angezeigt und analysiert. Weiters können die Bewegungsabläufe des Roboters mit den Befehlsinformationen für die Schweißvorrichtung am Computer simuliert werden. Nachteilig ist auch hier, dass lediglich die Daten des Roboters erfasst werden.

Aus dem Tutorial "Visualization and logging" Gazebo, 2014, Seite 1-7, XP055642231 ist die Speicherung von Daten für Verarbeitungsmaschinen zu entnehmen.

Weiters ist aus der DE 10 2016 000105 A1 eine Simulationsvorrichtung für ein Robotmodell in einem virtuellen Raum geoffenbart. Dabei handelt es sich um ein vorausblickendes Simulieren von zukünftigen Betriebszuständen eines Werkstückes zu einem Robotmodell. Nachteilig ist dabei ist dabei, dass anschließende Fehlzustände des physikalischen Roboters nicht am virtuellen Modell nachgestellt werden können.

Aus der DE 10 2009 023648 A1, der Offenbarung Benjamin D Rister et al "integrated Debugging of Large Modular Robot Ensembles", 2007 IEEE Internation Conference on Robotics and Automation, Kai Liang et al "Fault localization in embedded control system Software", Software engineering for smart Cyber-physical systems, IEE Press, NJ USA, und Jo J-Y et al "virtual testing of agile manufacturing Software using 3D graphical simulation", proceedings of the 1997 IEE internation conference on robotics and Automation sind ebenfalls Systeme für Rotobersimulationen bekannt.

Aufgabe der Erfindung ist es daher ein Verfahren für einen Roboter und/oder Robotsteuerung der eingangs genannten Art zu schaffen, mit der einerseits die zuvor beschriebenen Nachteile vermieden werden und andererseits die Bedienerfreundlichkeit wesentlich erhöht wird. Hierbei ist notwendig, dass von den gespeicherten Daten komplexe Rückschlüsse auf den Bewegungsablauf der Anlage genommen werden müssen, was das Herausfinden der Fehlerursache oft erschwert.

Die Aufgabe wird durch die Erfindung gelöst.

Die erfindungsgemäße Einrichtung ist dadurch gekennzeichnet, dass die Robotsteuerung laufend interne Daten, wie Zustandsänderungen, Positionen, interne Parameter, Zeitstempel, etc., des Roboters, der Spritzgießmaschine und vorzugsweise angeschlossener Automatisierungskomponenten bzw. -systeme aufzeichnet und im Falle des Auftretens eines Fehlers diese zuletzt aufgezeichneten Informationen mit dem Fehler verknüpft und abspeichert, wodurch die Zustandsänderungen bis zum Auftreten des jeweiligen Fehlers für eine Analyse an Hand eines virtuellen Modells des physikalischen Roboters nachgestellt und visuell dargestellt werden können, wobei die Datenspeicherung direkt in der Robotsteuerung vorgenommen und die Visualisierung mit Hilfe eines virtuellen Robotmodells an der Ausgabeeinheit der Robotsteuerung dargestellt wird, wobei das virtuelle Robotmodell die Bewegungen des Roboters in beliebiger Geschwindigkeit, insbesondere in Zeitlupe ablaufen lassen kann.

Vorteilhaft ist hierbei, dass dadurch direkt an der Anlage eine visuelle Simulation des oder der aufgetretenen Fehler anhand einer virtuellen Abbildung vorzugsweise auf der oder einer Ausgabeeinheit der Robotsteuerung vorgenommen werden kann, d.h., dass nach dem Auslösen eines Fehlers vom Wartungspersonal die Robotsteuerung zur Hand genommen wird und aufgrund der gespeicherten Daten der Ablauf zum Zustandekommen des Fehlers direkt auf der Robotsteuerung nachvollzogen werden kann. Somit kann die Ursache, warum der Fehler ausgelöst wurde, mit sehr hoher Wahrscheinlichkeit direkt an der Anlage ermittelt werden und entsprechende Gegenmaßnahmen vorgenommen werden. Es ist somit nicht erforderlich, dass die Daten auf einen PC oder Laptop, übertragen werden müssen, sodass eine möglichst schnelle und sichere Fehlererkennung und Behebung möglich ist. Auch ist es damit möglich, dass nach dem Beheben des oder der Fehler und der neuerlichen Inbetriebnahme der Anlage während des Arbeitszyklus der Anlage auf der Robotsteuerung der virtuelle Ablauf des oder der Fehler nochmals bzw. des Öfteren abgespielt werden kann, um noch weitere Details analysieren zu können, die für die Verbesserung der Anlage nützlich sein können. Ebenso können die Daten auch von der Robotsteuerung auf einen Laptop oder Computer oder eine andere Robotsteuerung oder ein übergeordnetes Netzwerk geladen werden, um diese fernab der Robotsteuerung in Ruhe zu analysieren.

Durch die Datenspeicherung auf der Robotsteuerung wird auch erreicht, dass eine ruckelfreie Simulation des Ablaufes ermöglicht wird, da keine Daten nachgeladen werden müssen. Durch die Vorortspeicherung auf der Robotsteuerung wird auch erreicht, dass das Wartungspersonal keine weiteren Hilfsmittel für das Herunterladen der Daten aus einer Datenbank der Anlage benötigt, sondern die Simulation sehr einfach Vorort erledigt werden kann. Damit wird eine möglichst geringe Ausfallszeit/Standzeit der Anlage erreicht, bis diese wieder einsetzbar ist. Selbstverständlich ist es möglich, dass zu einem späteren Zeitpunkt oder auch sofort, die Daten heruntergeladen oder in ein übergeordnetes Netzwerk hochgeladen werden können.

Eine Maßnahme ist von Vorteil, bei der das virtuelle Robotmodell die Bewegungen des Roboters in beliebiger Geschwindigkeit, insbesondere in Zeitlupe, ablaufen lassen kann. Somit kann der Entstehungsablauf im Detail analysiert bzw. betrachtet werden, indem beispielsweise kurz vor dem Auftreten des Fehlers die Geschwindigkeit des virtuellen Robotmodells verlangsamt oder sogar gestoppt wird, um sämtliche Details betrachten zu können. Hierbei kann das Wartungspersonal durch Betätigen definierter Buttons an der Robotsteuerung einfach unterschiedliche Geschwindigkeiten auswählen. Auch besteht die Möglichkeit, dass beim Ablauf des Robotmodells entsprechende Zeitpunkte markiert/definiert werden, zu dem bei einem neuerlichen Abspielvorgang automatisch von der Robotsteuerung die voreingestellte Geschwindigkeit verändert wird. Somit braucht sich das Wartungspersonal nicht auf die Aktivierung des sogenannten Zeitlupenablaufs konzentrieren, sondern kann die Details des virtuellen Ablaufs verfolgen.

Vorteilhaft sind die Maßnahmen, bei der jeweilige Änderungen der Betriebszustände und der relevanten Daten für einen definierten frei einstellbaren Zeitraum zwischen 100 ms bis zu einer Minute, vorzugsweise den Spritzzyklus der Verarbeitungsmaschine, vor Auftreten eines Fehlers abgespeichert werden. Dadurch wird sichergestellt, dass eine optimale Verfolgung für die Entstehung des Fehlers möglich ist. Der vollständigkeitshalber wird erwähnt, dass bei entsprechender Ausbildung der Robotsteuerung mit entsprechend großen Speicherelemente auch ein längerer Zeitraum für Speicherung bei auftretenden Fehlern möglich ist.

Von Vorteil sind die Maßnahmen, bei denen die Datenspeicherung unabhängig vom Betriebszustand des Roboters erfolgt bzw. durchgeführt wird. Dadurch kann auch während der Einstellarbeiten, falls das Wartungspersonal bei der Anlageneinstellung eine Fehleingabe verursacht, bereits eine Abspeicherung vorgenommen werden, sodass bei der Inbetriebnahme der Anlage ein Fehler ausgegeben wird und über die Robotsteuerung sofort die Fehlerursache, insbesondere die fehlerhafte Einstellung, festgestellt werden kann. Somit ist die Speicherung bzw. Aufnahme der Daten unabhängig des Betriebszustandes der Maschine gewährleistet, sodass auch Fehleingaben möglichst rasch aufgefunden werden können.

Auch ist es möglich, dass beispielsweise durch Aktivieren eines Speicherbuttons an der Robotsteuerung ein Speichervorgang eingeleitet wird. Damit kann das Wartungspersonal beispielsweise einen Arbeitszyklus beobachten und bei einem neuerlichen Arbeitszyklus zu einem gewünschten Zeitpunkt manuell eine Speicherung des vor- und/oder zurückliegenden Arbeitsablaufes über die voreingestellte Zeitdauer aufnehmen bzw. speichern. Somit können verdächtige Abläufe der Anlage, die möglicherweise zukünftig zu einem Fehlerzustand führen könnten, bereits vorab aufgezeichnet und analysiert werden.

Es sind aber auch die Maßnahmen von Vorteil, bei der weitere Zustände oder Zustandsänderungen des Roboters wie digitale oder analoge Ein- und Ausgänge bzw. deren Änderungen im virtuellen Modell eingeblendet werden. Dadurch wird erreicht, dass korrespondierend der mechanischen Positionen der Maschine bzw. Anlage gleichzeitig die elektrischen Signale überprüft bzw. betrachtet werden können. Somit muss nicht ständig zwischen der mechanischen Position der Anlage und der Ansicht der dazugehörigen elektrischen Zustände hin und her gewechselt werden, um die Fehlerursache aufzufinden.

Es sind die Maßnahmen vorteilhaft, bei denen die Verfahrparameter, Ausstattungsmerkmale und Funktionalitäten des Roboters in einer Konfigurationsdatei gespeichert werden, auf die der Roboter steuerungsseitig zugreift, wobei die Robotsteuerung aus dieser Konfigurationsdatei ein virtuelles Robotmodell erstellt, welches direkt auf der Robotsteuerung für die Validierung oder Visualisierung von Ablaufsequenzen angezeigt wird. Dadurch wird erreicht, dass eine möglichst exakte Darstellung des virtuellen Robotmodells mit dem mechanischen Aufbau des Verarbeitungsgerätes geschaffen wird.

Weiters wird die Erfindung durch einen Robotsteuerung gelöst, bei der die Robotsteuerung zum Ausführen des Verfahrens nach einem der Ansprüche 1 bis 5 ausgebildet ist.

Vorteilhaft ist hierbei, dass dadurch die Ausfallszeit des Verarbeitungsgerätes und der gesamten Anlage oder Arbeitszelle bei Auftreten eines Fehlers wesentlich reduziert wird, da direkt Vorort an der Maschine eine Analyse der Daten durch ein virtuelles Robotmodell auf der Robotsteuerung vorgenommen werden kann. Bei derartigen Anlagen ist es wesentlich, dass bei einem Ausfall eines Gerätes die Standzeit möglichst kurzgehalten wird, um hohe Ausfallskosten zu vermeiden. Durch die virtuelle Betrachtung des aufgezeichneten Arbeitsablaufes kann oftmals auf einfache und schnelle Art und Weise die Fehlerursache festgestellt werden, sodass entsprechende Gegenmaßnahmen bzw. Reparaturen durchgeführt werden können.

Der vollständigkeitshalber wird erwähnt, dass die Robotsteuerung mehrere Fehler mit den zugehörigen Daten, insbesondere Zustandsänderungen, Positionen, internen Parametern, Zeitstempeln, etc., aufzeichnen kann und diese Anzahl der Fehler und Verknüpfungen nur durch die Größe des Speichers der Robotsteuerung begrenzt ist.

Grundsätzlich kann gesagt werden, dass durch die erfindungsgemäße Lösung sichergestellt werden kann, dass bei einem Ausfall der Anlage die Standzeit möglichst kurzgehalten werden kann, da durch den visuellen Ablauf vorzugsweise auf der Robotsteuerung, ein schnelles Auffinden der Fehlerursache ermöglicht wird.

Die Erfindung wird an Hand eines in den Zeichnungen dargestellten Ausführungsbeispiel näher erläutert, wobei die Erfindung nicht auf die gezeigte Darstellung, insbesondere dem Aufbau und die Zusammensetzung der Anlage, begrenzt ist.

Es zeigen:
- Fig. 1: ein Übersichtbild einer kunststoffverarbeitenden Industrieanlage in einer Arbeitszelle, in vereinfachter, schematischer Darstellung;
- Fig. 2: eine schematische Darstellung eines virtuellen Robotmodells bzw. Zwilling auf einer Robotsteuerung, in vereinfachter, schematischer Darstellung;
- Fig. 3: eine schematische Darstellung des virtuellen Robotmodells bzw. Zwilling auf einer Robotsteuerung mit einer Auflistung zusätzlicher Daten, in vereinfachter, schematischer Darstellung;
- Fig. 4: eine schematische vergrößerte Darstellung des virtuellen Robotmodells bzw. Zwilling auf der Robotsteuerung mit an den einzelnen Komponenten dargestellten Daten, insbesondere gespeicherte Ist-Werte von Sensoren, in vereinfachter, schematischer Darstellung.

Einführend sei festgehalten, dass in den unterschiedlichen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die beschriebene Figur bezogen und sind bei einer Lageänderung sinngemäß auf die neue Lage zu übertragen. Auch können Einzelmerkmale oder Merkmalskombinationen aus den gezeigten und beschriebenen Ausführungsbeispielen für sich eigenständige erfinderische Lösungen darstellen.

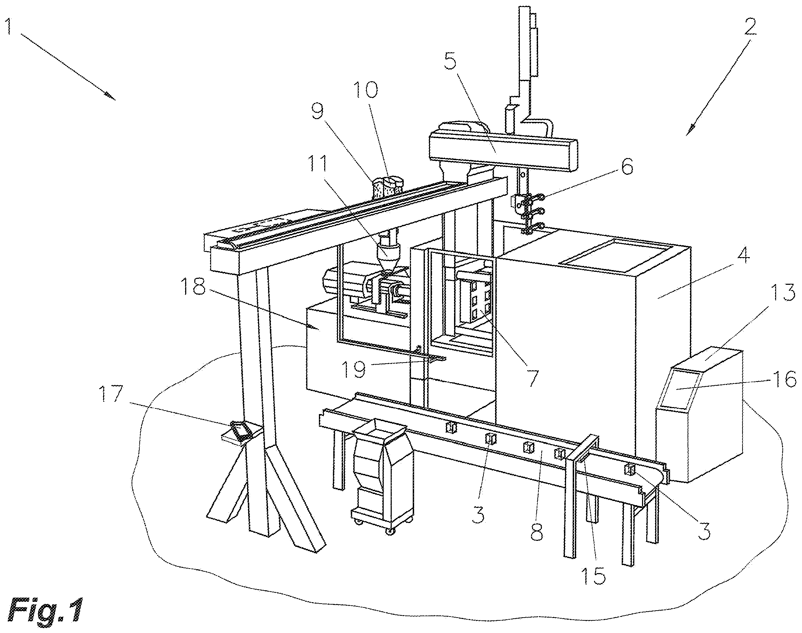

In Fig. 1 ist eine Industrieanlage 1, insbesondere eine Arbeitszelle 2 für Spritzgießanwendungen gezeigt, bei der die einzelnen Komponenten/Geräte zum Erzeugen eines oder mehrerer Produkte/Halbprodukte oder Spritzgießteile 3 in der Arbeitszelle 2 zusammen geschaltet sind. Als Verarbeitungsmaschine wird vorzugsweise eine Spritzgießmaschine 4, eingesetzt, der ein Roboter 5 bzw. Handhabungsautomat zum Entnehmen des hergestellten Spritzgießteils 3 zugeordnet ist. Dabei wird das Spritzgießteil 3 von einer Entnahmevorrichtung 6, insbesondere mit einem Greifer ausgestattet mit Greifzangen und/oder Saugdüsen, aus einer sich öffnenden Spritzgussform 7 entnommen und auf eine Vorrichtung, insbesondere einem Transportband 8, abgelegt.

Beispielsweise ist es möglich, dass für die Herstellung eines Spritzgießteil 3 Kunststoffgranulat 9 über ein Granulatfördergerät 10 und eventuell über ein Dosiergerät 11 oder aus einem Vorratslager der Verarbeitungsmaschine 4 zugeführt wird. Über ein Temperiergerät 13 und/oder Kühlgerät kann die Spritzgussform 7 durch Zuführung eines Temperiermediums auf Betriebstemperatur gehalten werden bzw. entsprechend geheizt oder gekühlt werden, sodass eine optimale Verarbeitung des Kunststoffgranulates 9, welches zum Einspritzen in die Spritzgussform 7 plastifiziert werden muss, ermöglicht wird.

Zusätzlich kann die Anlage eine Überwachungsvorrichtung 15, insbesondere ein Kamerasystem, aufweisen, um eine automatische Qualitätskontrolle des erzeugten Produktes 3 durchführen zu können. Ebenso sind sehr häufig vor- bzw. nachgeschaltete Automatisierungsanlagen 18 vorhanden, z.B. Angußabschneide-19, Zentrier-, Vereinzelungs-, Zuführstationen, Kisten-, Palettenstapelstationen, etc., die direkt in die Robotsteuerung bzw. Industrieanlage 1 eingebunden und von dieser über digitale oder analoge Signale oder andere Kommunikationsschnittstellen gesteuert werden. Die Erstellung der Ablauf- und Steuerlogik für den Roboter 5 bzw. Handhabungsautomat 5 und etwaige angeschlossene Automatisierungskomponenten 18 bzw. -anlagen erfolgt typischerweise im Teach-In-Verfahren. Ebenso kann die Programmierung der Ablauf- und Steuerlogik zuerst offline auf einem PC erfolgen. Die anlagenspezifischen Werte, z.B. die tatsächlichen Positionen der Achsen, werden dann wieder im Teach-In-Verfahren ergänzt.

Damit die einzelnen Geräte eingestellt bzw. programmiert werden können, weisen diese vorzugsweise eine Steuerelektronik (nicht dargestellt) auf, wobei die Einstellung bzw. Programmierung über an den Geräten angeordneten Displays 16 oder einer Robotsteuerung 17 eingegeben und angezeigt werden. Dabei kann über die Robotsteuerung 17 mit den einzelnen Komponenten vorzugsweise drahtlos eine Verbindung aufgebaut werden, sodass eine für dieses Gerät entsprechend hinterlegte Oberfläche aufgerufen wird. Selbstverständlich ist es möglich, dass auch über eine externe Komponente, die über eine Schnittstelle mit den Geräten verbunden ist, die Programmierung bzw. Einstellung erfolgen kann.

Der vollständigkeitshalber wird des Weiteren erwähnt, dass sämtliche Geräte mit entsprechenden Leitungen, insbesondere Spannungsversorgungen, Netzwerk- und Verbindungsleitungen, Flüssigkeitsversorgungsleitungen, Materialleitungen usw. verbunden sind, die in der gezeigten Darstellung der übersichtshalber nicht dargestellt wurden.

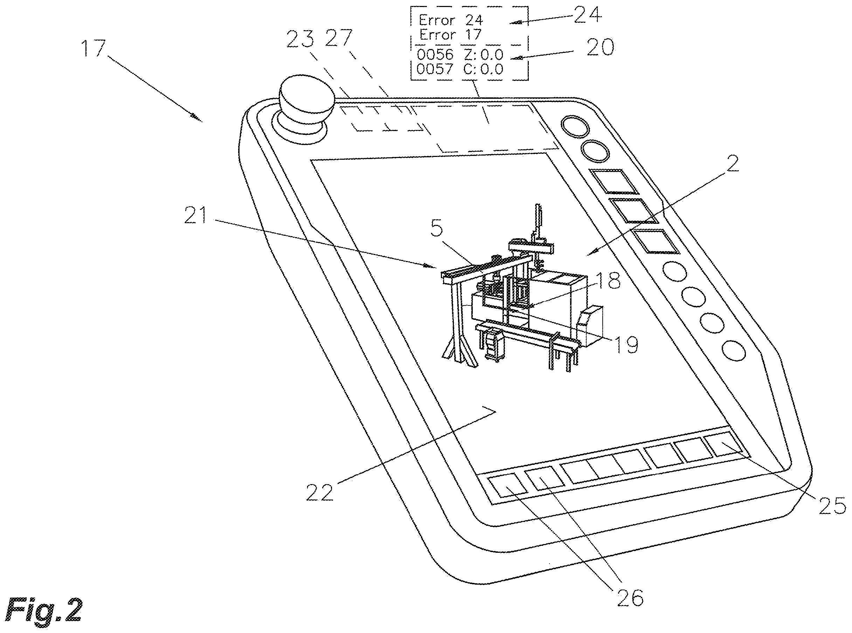

Gemäß der Fig. 1 bis 4 ist erfindungsgemäß ein Verfahren zur laufenden Speicherung von internen Daten 20 des Roboters 5 bzw. etwaiger angeschlossener Automatisierungskomponenten 18 bzw. -systeme 6, 8, 15,19 in der Robotsteuerung 17, insbesondere Betriebszuständen zur Visualisierung von zeitlich zurückliegenden Ablauf- und Logiksequenzen hierfür, gezeigt.

Die Robotsteuerung 17 ist zur Wiedergabe eines virtuellen Zwillings bzw. Robotmodells 21, insbesondere einer virtuellen Darstellung der Anlage bzw. Arbeitszelle 2, am Ausgabepunkt, insbesondere einem Touch-Screen 22, ausgebildet, wobei sämtliche angeschlossene Automatisierungskomponenten 18 bzw. -systeme 6, 8, 15, 19 der Arbeitszelle 2 bzw. der Industrieanlage 1 automatisch über Konfigurationsdateien 27 eingelesen oder manuell in das Modell eingefügt und dargestellt werden.

Die für die Fehleranalyse und virtuelle Darstellung von Betriebszuständen wichtigen Daten 20 werden von der Robotsteuerung 17 direkt eingelesen und in der Logdatei 23 gespeichert. Die Robotsteuerung 17 erstellt aus der Konfigurationsdatei 27 ein virtuelles Robotmodell 21 und aus einer Logdatei 23 die entsprechenden Ablaufsequenzen und Betriebszustände des virtuellen Robotmodells 21, welche direkt auf der Robotsteuerung 17 für die Validierung oder Visualisierung angezeigt werden. Hierbei kann der am Display 22 dargestellte virtuelle Zwilling bzw. das virtuelle Robotmodell 21 beliebig vergrößert oder verkleinert und in der Ansichtsposition verändert werden, wozu das Display vorzugsweise als Touch-Display 22 ausgebildet ist. Somit kann ein Nutzer, insbesondere ein Wartungspersonal, über die Robotsteuerung 17 auf einfach Art und Weise das virtuelle Robotmodell 21 bedienen und einstellen.

Bei derartig automatisch arbeiteten Anlagen bzw. Arbeitszellen 2 kann es vorkommen, dass während des Betriebs unterschiedlichste Fehler 24 beispielsweise durch fehlerhafte Signalübermittlung in der Kommunikation zwischen Maschine 4 und Roboter 5, zeitlichem Versatz in der Abarbeitung von Funktionen, nicht konstanten Spritzparametern, die beispielsweise ein Steckenbleiben von zu entnehmenden Spritzgießartikeln 3 verursachen oder verschlissene Komponenten in den mechanischen Schnittstellen zwischen Spritzgießartikel 3 und den Automatisierungskomponenten 18 bzw. -systemen 6, 8, 15, 19, usw., auftreten können, sodass die Anlage automatisch gestoppt wird, wobei üblicherweise beim Auftreten eines Fehlzustandes eine Fehlermeldung bzw. Fehler 24, insbesondere ein oder mehrere Fehlerbenachrichtigungen ausgegeben werden. Das Wartungspersonal oder eine Fachkraft kann oftmals in einer entsprechenden Fehlerliste 24 nachschauen, um welchen Fehler 24 es sich handelt und was die Ursache hierfür ist. Dies ist jedoch sehr oft nicht hilfreich, da ein Fehler 24 oftmals verschiedenste Ursachen haben kann, oder nur durch eine bestimmte Zustandskombination von Roboter 5 und/oder Spritzgießmaschine 4 und/oder Automatisierungskomponenten 6, 8, 15,18 hervorgerufen wird, die vom Wartungspersonal selbst festgestellt werden müssen, um einen weiteren fehlerfreien Betrieb zu ermöglichen. Dabei ist es sehr wesentlich, dass die Stillstandszeit bzw. Ausfallszeit der gesamten Arbeitszelle 2 so kurz wie möglich gehalten wird, um den Produktionsausfall und die verloren gegangene Produktionskapazität so klein wie möglich zu halten.

Erfindungsgemäß ist hierzu vorgesehen, dass die Robotsteuerung 17 Daten 20, insbesondere Zustandsänderungen, Positionen, interne Parameter, Zeitstempel, etc. in der Logdatei 23 aufzeichnet und im Falle des Auftretens eines Fehlers 24 die Daten 20 mit dem Fehler 24, insbesondere den Fehlermeldungen verknüpft, wodurch die Zustandsänderungen bis zum Auftreten des jeweiligen Fehlers 24 für eine Analyse an Hand des virtuellen Modells 21 des physikalischen Roboters 5 nachgestellt und visuell dargestellt wird. D.h., dass während des funktionierenden Produktionsablaufes der Arbeitszeile 2 ständig von einem Gerät, vorzugsweise der Robotsteuerung 17, speziell definierte Daten 20 oder alle zur Verfügung stehende Daten 20 kurzzeitig, insbesondere über einen definierten Zeitraum, kontinuierlich mitgespeichert werden. Tritt plötzlich ein Fehler 24 in der Anlage auf, so werden die kurzzeitig gespeicherten und relevanten Daten 20 mit dem Fehler 24 verknüpft, wobei vorzugsweise gleichzeitig eine Fehlermeldung ausgegeben wird. Ist der Fehler 24 schwerwiegend, so wird die gesamte Anlage, insbesondere die Arbeitszelle 2, gestoppt.

Damit die Fehlerursache möglichst schnell eruiert werden kann, ist es nunmehr möglich, dass eine Simulation auf der Robotsteuerung 17 mit den gespeicherten Daten 20 abgespielt werden kann, d.h., dass ein sogenannter virtueller Zwilling bzw. Robotmodell 21 auf der Robotsteuerung 17 aufgerufen wird, der auf die gespeicherten Daten 20 in der Logdatei 23 mit dem Fehlercode 24 zugreift und diese zur Simulation ladet. Somit kann das Wartungspersonal durch den virtuellen Ablauf beobachten, wie der Fehler 24 zustande gekommen ist und entsprechend schnell Gegenmaßnahmen ergreifen, sodass die Anlage wieder einsatzbereit ist.

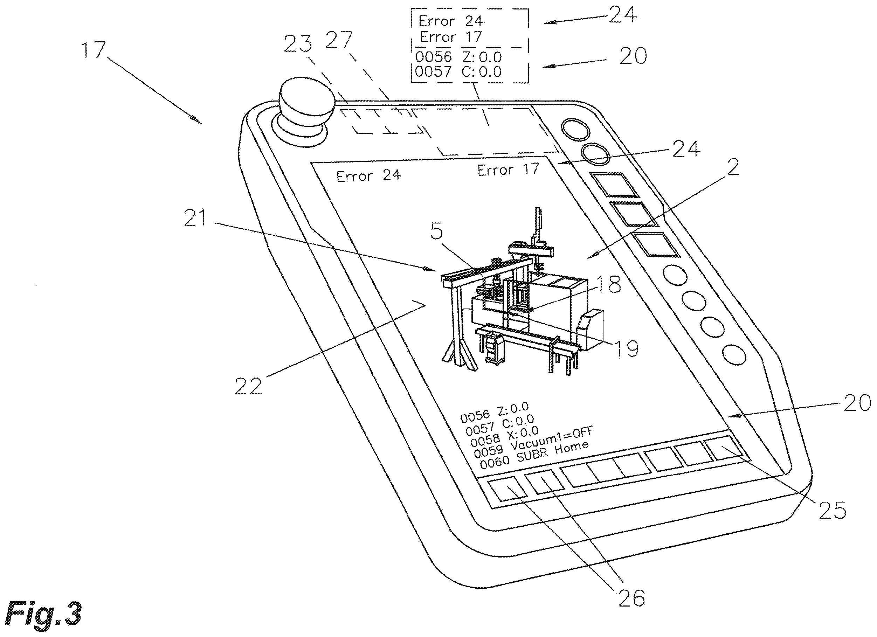

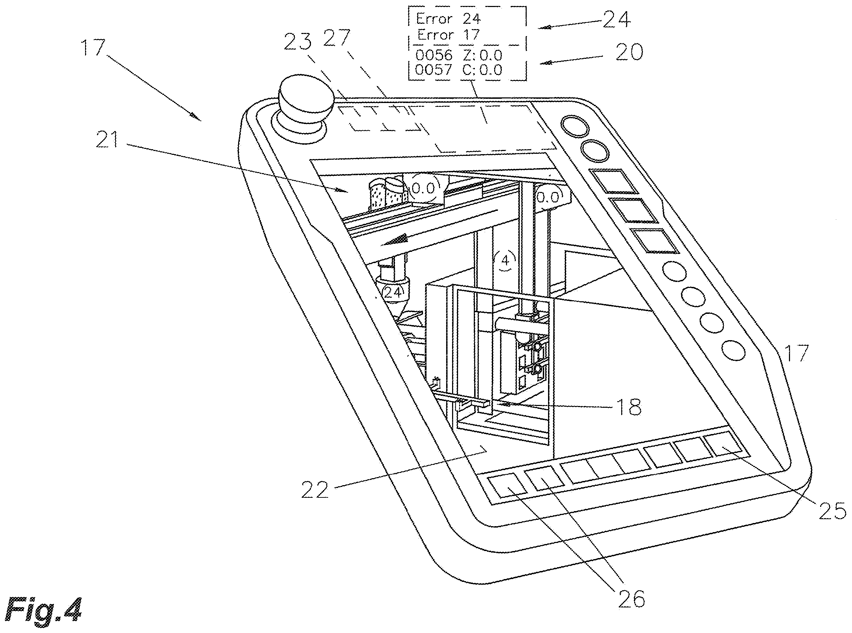

Als sehr hilfreich hat sich herausgestellt, dass zusätzlich zu dem virtuellen Ablauf noch weitere Daten 20, insbesondere die gerade ablaufenden Ablauf- und Steuersequenzen mit den zugehörigen Ist-Zuständen, wie in Fig. 3 und 4 dargestellt, angezeigt werden. Damit kann die mechanische Position in Zusammenhang mit den elektrischen und numerischen Ist-Werten von Gebern und Sensoren einfach verglichen werden. Der vollständigkeitshalber wird darauf hingewiesen, dass jederzeit und zu jedem beliebigen Zeitpunkt auf der Robotsteuerung 17 zwischen dem virtuellen Robotmodell 21 und dem tatsächlichen Roboter 5 umgeschaltet werden kann.

Um eine exakte Fehlererkennung zu ermöglich, ist es weiters möglich, dass das virtuelle Robotmodell 21, insbesondere der virtuelle Zwilling 21, die Bewegungen des Roboters 5 in beliebiger Geschwindigkeit, insbesondere in Zeitlupe, ablaufen lassen kann. Vorzugsweise wird dabei die Geschwindigkeit reduziert, um den genauen Bewegungsablauf am Robotmodell 21 beobachten zu können. Hierbei ist es möglich, dass wiederum ein oder mehrere Geschwindigkeits-Buttons 26, gemäß schematischer Darstellung in Fig. 4, vorhanden sind, um eine einfache und schnelle Reduzierung der Abspiel-Geschwindigkeit des Robotmodells 21 zu ermöglichen. Somit kann der Beobachter die kleinsten Veränderungen am virtuellen Robotmodell 21 oder auch kurzzeitige Änderungen von Ein- und Ausgängen, Sensor- oder Geberwerten, etc. sicher erkennen.

Es ist auch möglich, dass beliebige Zustände von Daten 20 der Ein- und Ausgänge, Sensoren oder Gebern, vom Benutzer ausgewählt werden können, die während des Ablaufes angezeigt werden. Vorteilhaft ist dies, wenn der die Fehlerursache für Fehler 24 nach einem Ablauf vermeintlich nicht aufgefunden wurde, sodass weitere oder andere Daten 20 für einen nochmaligen Ablauf angezeigt werden, um ev. auftretende Unregelmäßigkeiten in den Ist-Werten zu erkennen. Hierzu ist es möglich, dass von der Robotsteuerung 17 ein Untermenü aufgerufen werden kann, woraus die Daten 20 ausgewählt werden können.

Um einen schnellen Zugriff auf die gespeicherten Daten 20 zu ermöglich, werden die Daten 20 direkt in der Robotsteuerung 17 gespeichert. Selbstverständlich ist es möglich, dass die Daten 20 auch auf ein externes Speichermedium, z.B. PC oder Laptop gespeichert werden, um eine langfristige Speicherung zu gewährleisten.

Der vollständigkeitshalber wird erwähnt, dass bei dem aufgezeichneten Daten 20 diese vorzugsweise über einen definierten Zeitraum aufgezeichnet werden, um die Datenmenge entsprechend zu begrenzen. Auch ist es wesentlich, dass die Daten mit einem Zeitstempel automatisch versehen werden, sodass bei der Simulation immer die zu den jeweiligen Zeitpunkten auftretenden Werte dargestellt und angezeigt werden. Hierzu kann vom Wartungspersonal oder einem Fachpersonal die Zeitdauer für die Aufzeichnungspunkte, also Zeit zwischen zwei Speicherungen, frei eingestellt werden, wobei bei geringeren Zeitabständen eine höhere Genauigkeit der Darstellung erreicht wird, jedoch eine größere Datenmenge gespeichert werden muss.

Es ist auch möglich, dass die Datenspeicherung unabhängig vom Betriebszustand des Roboters 5 erfolgt bzw. durchgeführt wird, d.h., dass beispielsweise eine manuelle Auslösung der Datenspeicherung von einem Wartungspersonal eingeleitet werden kann, worauf über die definierte Zeitdauer eine Datenaufzeichnung auch ohne Fehler 24 vorgenommen wird. Hierbei ist es auch möglich, dass die manuell gestartete Datenaufzeichnung auch erst durch einen manuellen Stopp wieder beendet wird, sodass das Wartungspersonal solange die Daten aufzeichnet, wie dies für Sie nötig ist.

Der Ordnung halber wird darauf hingewiesen, dass die Erfindung nicht auf die dargestellten Ausführungsvarianten beschränkt ist, sondern auch weitere Ausbildungen beinhalten kann, soweit diese in den Schutzbereich der Ansprüche fallen.

## Patentansprüche

1. Verfahren zur laufenden Speicherung von internen Betriebszuständen (20) und zur Visualisierung von zeitlich zurückliegenden Ablaufsequenzen für einen Roboter (5), umfassend eine Robotsteuerung (17), wobei der Roboter (5) auf oder neben einer Spritzgießmaschine (4) montiert ist und eine Entnahme, Handhabung, Manipulation oder Weiterbearbeitung von gerade produzierten Spritzgießteilen (3) durchführt, **dadurch gekennzeichnet, dass** die Robotsteuerung (17) laufend interne Daten (20), wie Zustandsänderungen, Positionen, interne Parameter, Zeitstempel, etc., des Roboters (5), der Spritzgießmaschine (4) und vorzugsweise angeschlossener Automatisierungskomponenten 18 bzw. -systeme (6, 8, 15,19) aufzeichnet und im Falle des Auftretens eines Fehlers (24) diese zuletzt aufgezeichneten Informationen mit dem Fehler (24) verknüpft und abspeichert, wobei die Zustandsänderungen bis zum Auftreten des jeweiligen Fehlers (24) für eine Analyse an Hand eines virtuellen Modells (21) des physikalischen Roboters (5) nachgestellt und visuell dargestellt werden, wobei die Datenspeicherung direkt in der Robotsteuerung (17) vorgenommen und die Visualisierung mit Hilfe eines virtuellen Robotmodells (21) an der Ausgabeeinheit der Robotsteuerung (17) dargestellt wird, wobei das virtuelle Robotmodell (21) die Bewegungen des Roboters (5) in unterschiedlicher Geschwindigkeit, insbesondere in Zeitlupe ablaufen lassen kann.

2. Verfahren nach Anspruch 1, **dadurch gekennzeichnet, dass** jeweilige Änderungen der Betriebszustände und relevante Daten (20) für einen Zeitraum zwischen 100 ms bis zu einer Minute, vorzugsweise dem Spritzzyklus der Verarbeitungsmaschine, vor Auftreten eines Fehlers (24) in der Robotersteuerung (17) abgespeichert werden.

3. Verfahren nach Anspruch 1 oder 2, **dadurch gekennzeichnet, dass** die Datenspeicherung unabhängig vom Betriebszustand des Roboters (5) erfolgt bzw. durchgeführt wird.

4. Verfahren nach einem der vorhergehenden Ansprüche, **dadurch gekennzeichnet, dass** weitere Zustände oder Zustandsänderungen des Roboters (5) wie digitale oder analoge Ein- und Ausgänge bzw. deren Änderungen im virtuellen Modell (21) eingeblendet werden.

5. Verfahren nach einem der vorhergehenden Ansprüche, **dadurch gekennzeichnet, dass** die Verfahrparameter, Ausstattungsmerkmale und Funktionalitäten des Roboters in einer Konfigurationsdatei (23) gespeichert werden, auf die der Roboter (5) steuerungsseitig zugreift, wobei die Robotsteuerung aus dieser Konfigurationsdatei (23) ein virtuelles Robotmodell (21) erstellt, welches direkt auf der Robotsteuerung (17) für die Validierung und/oder Visualisierung von Ablaufsequenzen angezeigt wird.

6. Roboter (5), umfassend eine Robotsteuerung (17) zur laufenden Speicherung von interner Betriebszuständen (20) und zur Visualisierung von zeitlich zurückliegenden Ablaufsequenzen, wobei der Roboter (5) auf oder neben einer Verarbeitungsmaschine, insbesondere einer Spritzgießmaschine (4), montiert ist und für die Entnahme, Handhabung, Manipulation oder Weiterbearbeitung von gerade produzierten Spritzgießteilen (3) ausgebildet ist, **dadurch gekennzeichnet, dass** die Robotsteuerung (17) zum Ausführen des Verfahrens nach einem der vorhergehenden Ansprüche 1 bis 5 ausgebildet ist.

## Claims

1. Method for the continuous storage of internal operating states (20) and for the visualization of past workflow sequences for a robot (5), comprising a robot controller (17), wherein the robot (5) is mounted on or next to an injection-molding machine (4), and performs an extraction, handling, manipulation or further processing of injection-molded parts (3) which have just been produced, **characterized in that** the robot controller (17) continuously stores internal data (20), such as changes in state, positions, internal parameters, time stamps, etc., of the robot (5), of the injection-molding machine (4) and preferably of connected automation components 18 and/or systems, respectively (6, 8, 15,19), and, in case of occurrence of an error (24), links this most recently recorded information to the error (24) and stores it, wherein the changes in state up to the occurrence of the respective error (24) are reconstructed for analysis on the basis of a virtual model (21) of the physical robot (5) and visually displayed, wherein the data storage is carried out directly in the robot controller (17) and the visualization displayed on the output unit of the robot controller (17) with the aid of a virtual robot model (21), wherein the virtual robot model (21) is able to run the movements of the robot (5) at various speeds, in particular in slow motion.

2. Method according to claim 1, **characterized in that** respective changes in the operating states and relevant data (20) are stored for a period of time between 100 ms and one minute, preferably the injection cycle of the processing machine, before the occurrence of an error (24) in the robot controller (17).

3. Method according to claim 1 or 2, **characterized in that** the data storage takes place or is carried out, respectively, independently of the operating state of the robot (5).

4. Method according to any of the preceding claims, **characterized in that** further states or changes of state of the robot (5), such as digital or analog inputs and outputs or their changes, respectively, are overlaid onto the virtual model (21).

5. Method according to any of the preceding claims, **characterized in that** the travel parameters, equipment features and functionalities of the robot are stored in a configuration file (23) which the robot (5) accesses on the control side, wherein the robot controller creates a virtual robot model (21) from this configuration file (23), which is displayed directly on the robot controller (17) for the validation and/or visualization of workflow sequences.

6. Robot (5), comprising a robot controller (17) for the continuous storage of internal operating states (20) and for the visualization of past workflow sequences, wherein the robot (5) is mounted on or next to a processing machine, in particular an injection-molding machine (4), and is designed for the extraction, handling, manipulation or further processing of injection-molded parts (3) which have just been produced, **characterized in that** the robot controller (17) is designed for carrying out the method according to any of the preceding claims 1 to 5.

## Revendications

1. Procédé pour l'enregistrement continu d'états de fonctionnement internes (20) et pour la visualisation de séquences de déroulement remontant dans le temps pour un robot (5), comprenant une commande du robot (17), le robot (5) étant monté sur ou à côté d'une presse d'injection (4) et effectuant un prélèvement, une manipulation, une manipulation ou un traitement ultérieur de pièces moulées par injection (3) qui viennent d'être produites, **caractérisé en ce que** la commande du robot (17) enregistre en continu des données internes (20), comme des changements d'état, des positions, des paramètres internes, des horodatages, etc., du robot (5), de la presse d'injection (4) et, de préférence, des composants 18 ou systèmes d'automatisation raccordés (6, 8, 15, 19) et, en cas de survenance d'une erreur (24), associe ces dernières informations enregistrées à l'erreur (24) et les enregistre, les modifications d'état jusqu'à la survenance de l'erreur respective (24) étant reproduites et représentées visuellement pour une analyse au moyen d'un modèle virtuel (21) du robot physique (5), l'enregistrement des données étant effectué directement sur la commande du robot (17) et la visualisation étant représentée à l'aide d'un modèle de robot virtuel (21) sur l'unité de sortie de la commande du robot (17), le modèle de robot virtuel (21) pouvant faire défiler les mouvements du robot (5) à différentes vitesses, en particulier au ralenti.

2. Procédé selon la revendication 1, **caractérisé en ce que** des modifications respectives des états de fonctionnement et des données pertinentes (20) sont enregistrées sur la commande du robot (17) pour une période comprise entre 100 ms et une minute, de préférence le cycle d'injection de la machine de traitement, avant la survenance d'une erreur (24).

3. Procédé selon la revendication 1 ou 2, **caractérisé en ce que** l'enregistrement des données est effectué ou réalisé indépendamment de l'état de fonctionnement du robot (5).

4. Procédé selon l'une des revendications précédentes, **caractérisé en ce que** d'autres états ou modifications d'état du robot (5) tels que des entrées et sorties numériques ou analogiques ou leurs modifications sont affichés sur le modèle virtuel (21).

5. Procédé selon l'une des revendications précédentes, **caractérisé en ce que** les paramètres de translation, les caractéristiques d'équipement et les fonctionnalités du robot sont enregistrés dans un fichier de configuration (23) auquel le robot (5) accède côté commande, la commande du robot créant, à partir de ce fichier de configuration (23), un modèle de robot virtuel (21) qui est affiché directement sur la commande du robot (17) pour la validation et/ou la visualisation de séquences de déroulement.

6. Robot (5), comprenant une commande du robot (17) pour l'enregistrement continu d'états de fonctionnement internes (20) et pour la visualisation de séquences de déroulement remontant dans le temps, le robot (5) étant monté sur ou à côté d'une machine de traitement, en particulier une presse d'injection (4), et étant conçu pour le prélèvement, la manipulation, la manipulation ou le traitement ultérieur de pièces moulées par injection (3) qui viennent d'être produites, **caractérisé en ce que** la commande du robot (17) est conçue pour exécuter le procédé selon l'une des revendications précédentes 1 à 5.
